# EUROPÄISCHE PATENTSCHRIFT

(11) **EP 2 878 056 B1**
(45) Veröffentlichungstag und Bekanntmachung des Hinweises auf die Patenterteilung: **10.05.2017**
(21) Anmeldenummer: 13727221.7
(22) Anmeldetag: 07.06.2013
(51) Int. Cl.: H02B 7/08, E02D 29/12

(54) **UNTERIRDISCHER SCHALTSCHRANK FÜR DIE ELEKTROINSTALLATION**
UNDERGROUND SWITCH CABINET FOR ELECTRIC INSTALLATION
ARMOIRE DE COMMANDE SOUTERRAINE CONÇUE POUR UNE INSTALLATION ÉLECTRIQUE

(30) Priorität: 18.06.2012 DE 102012105274
(43) Veröffentlichungstag der Anmeldung: 03.06.2015
(73) Patentinhaber: Berthold Sichert GmbH, 12277 Berlin (DE)
(72) Erfinder: IRMER, Günter, 13055 Berlin (DE); PERSCHON, Helmut, 12305 Berlin (DE)
(74) Vertreter: Weickmann & Weickmann PartmbB
(86) Internationale Anmeldenummer: PCT/EP2013/061829
(87) Internationale Veröffentlichungsnummer: WO 2013/189764

(56) Entgegenhaltungen:
- EP-A2- 1 515 409
- WO-A1-95/27324
- WO-A1-2005/024147
- WO-A1-2006/096839
- CH-A- 427 952
- DE-U- 1 964 787
- DE-U1- 8 500 005
- FR-A1- 2 824 503
- US-A- 4 709 120

## Beschreibung

### I. Anwendungsgebiet

Die Erfindung betrifft unterirdische Schaltschränke für die Installation und Verschaltung elektrischer und optischer Leitungen.

### II. Technischer Hintergrund

Schaltschränke im Außenbereich, um die es hier geht, werden häufig benötigt, um z.B. Schwachstromverkabelungen, insbesondere für die Telekommunikation, zu schalten, wofür in den Schaltschränken u. a. auch aktive, stromverbrauchende, Komponenten enthalten sind.

Dazu gehören ferner auch die notwendigen Installationen für Handy-Funkmasten, aber es kann sich dabei z.B. auch um die Gleichrichter von im Freien aufgestellten Photovoltaikanlagen handeln.

Unter einem Schaltschrank soll also für die Zwecke der vorliegenden Anmeldung jede elektrische Installation verstanden werden, insbesondere wenn sie Strom verbrauchen und/oder Elektronikkomponenten enthalten.

Derartige Schaltschränke bestehen üblicherweise aus einem Schaltschrankgestell, welches nach Art eines z. B. Rahmens die Stabilität vorgibt, und an welchem die Schaltschrank-Komponenten, die mit den zu- und abführenden elektrischen Kabeln verbunden werden, befestigt sind, und von einem umgebenden Gehäuse geschützt sind.

In letzter Zeit gehen jedoch Kommunen verstärkt dazu über, die oberirdische Montage solcher z. B. Telefon-Schaltschränke vor Häusern, z. B. auf Fuß- und Radwegen oder anderem öffentlichen Grund, zu untersagen und fordern stattdessen im Untergrund versenkte Schaltschränke. Dadurch sollen die optischen Möglichkeiten der Gestaltung des öffentlichen Raumes verbessert und der öffentliche Raum nicht reduziert werden.

Auch die Telekommunikationsfirmen stehen diesem Gedanken nicht unbedingt negativ gegenüber, da derartige unterirdische Schaltschränke in der Erstinvestition zwar teurer sind als die überirdischen Varianten, auf der anderen Seite jedoch das Risiko von Beschädigungen, insbesondere durch Kraftfahrzeuge, dadurch ausgeschlossen wird. Angesichts der zum Teil sechsstelligen Kosten für die Wiederherstellung eines umgefahrenen oberirdischen Schaltschranks bzw. die Vermeidung diesbezüglicher hoher Versicherungsprämien amortisiert dies die Mehrkosten gleich mehrerer unterirdischer Schaltschränke, ganz abgesehen von der vermiedenen Netz-Ausfallzeit.

Ein weiterer Grund für die unterirdische Anordnung von solchen Schaltschränken ist der Schutz vor Diebstahl:
Gerade in ärmeren Ländern stellen die in einem solchen Schaltschrank enthaltenen Komponenten Werte dar, die zum Diebstahl reizen, selbst wenn es dabei nur um den reinen Materialwert der entwendeten Komponenten geht. Der dadurch angerichtete Schaden ist jedoch weitaus größer, so dass eine diebstahlsichere Unterbringung im Boden den damit verbundenen höheren Aufwand lohnt.

Ein Grund kann auch die hohe Temperaturbelastung und vor allem Temperaturwechselbelastung von überirdisch montierten Schaltschränken in heißen, oft wüstenartigen, Ländern sein, die dann bei oberirdischen Schaltschränken eine aufwendige Einhausung und aktive Kühlung solcher erfordert, was gerade im Outdoor-Bereich große Probleme und Folgekosten bewirken kann. Durch die unterirdische Anordnung wird - ab einer gewissen Tiefe - eine sehr geringe Schwankungsbreite der Temperatur erzielt, und damit kann auf eine aktive Kühlung häufig vollständig verzichtet werden.

Die meisten bisherigen Lösungen derartiger unterirdischer Schaltschränke zielen darauf ab, in einer meist mehrteilig ausgekleideten abzudichtenden Grube, deren Auskleidung oft auch selbst aus verschiedenen Materialien besteht, im Untergrund den Schaltschrank auf einer Hebemechanik anzuordnen. Für Reparatur- und Wartungsarbeiten am unterirdischen Schaltschrank wird also die Abdeckung der unterirdischen Auskleidung entfernt und mittels der integrierten Mechanik das Schaltschrankgestell mit den darin befindlichen Schaltschrankkomponenten auf ein Niveau oberhalb der Erdgleiche angehoben, so dass der Monteur oberirdisch daran arbeiten kann.

Nachteilig ist dabei, dass zum einen eine solche Hubmechanik sehr langlebig ausgebildet sein muss und daher entsprechend teuer wird und vor allem, dass durch die Anhebbarkeit des gesamten Schaltschrankes die Kabelverbindung vom Erdkabel zum Schaltschrank eine ausreichend große Kabelreserve enthalten muss, die im abgesenkten Zustand sicher und knickfrei untergebracht werden muss.

Darüber hinaus belasten die beim Heben und Senken des Schaltschrankes bewegten Kabel die abgedichteten Kabeleinlässe und führen häufig zu einer Undichtigkeit dieser Dichtungssysteme. Die Folge ist dann - zunächst unbemerkter - Wassereinbruch über die Kabeleinführung in die Grubenauskleidung und in der Folge ein Kurzschluss und/oder Ausfall bzw. Unbrauchbarkeit der Technik im Schaltschrank.

Aus der EP 1 515 409 A2 ist ein unterirdischer Schaltschrank gemäß dem Oberbegriff des Anspruchs 1 bekannt.

### III: Darstellung der Erfindung

### a) Technische Aufgabe

Es ist daher die Aufgabe gemäß der Erfindung, einen unterirdischen Schaltschrank sowie ein Verfahren zu seiner Herstellung zu schaffen, welches einfach und kostengünstig ist, hohe Lebensdauer verspricht und dennoch an die Bedingungen des Einsatzortes angepasst werden kann.

### b) Lösung der Aufgabe

Diese Aufgabe wird durch die Merkmale des Anspruch **1** gelöst. Vorteilhafte Ausführungsformen ergeben sich aus den Unteransprüchen.

Der erfindungsgemäße unterirdische Schaltschrank besteht aus einem im Untergrund fixierten und dort verbleibenden Unterflurbehälter gemäß Anspruch 1.

Insbesondere soll die Anzahl von Verschraubungen zwischen dem Schaltschrankgestell und dem Unterflurbehälter minimiert werden oder auf Verschraubungen am besten vollständig verzichtet werden.

Denn da der Unterflurbehälter aus Kunststoff besteht, um ihn haltbar und dennoch leicht und kostengünstig herstellen zu können, müsste eine Verschraubung des Schaltschrankgestelles gegenüber dem Kunststoff des umgebenden Behälters als eine Lösung durch die Kunststoffwandung hindurch erfolgen mit entsprechenden Gegenlagen auf der Außenseite, was die Dichtigkeit des Behälters stark verschlechtert.

Eine andere Lösung ist das Einbringen von Metallteilen wie etwa Befestigungsmuttern in der Kunststoffwand beim Herstellen des Behälters. Dies ist weniger haltbar, relativ aufwändig und nur bei bestimmten Herstellungsverfahren für den Kunststoffbehälter möglich, insbesondere nicht bei dem hier favorisierten Schleuderguss-Verfahren.

Ein weiterer Nachteil von Verschraubungen besteht darin, dass die miteinander verschraubten Teile, also der Behälter aus Kunststoff einerseits und das aus in der Regel Metall bestehende Schaltschrankgestell andererseits, eine unterschiedliche Wärmedehnung besitzen und bei den im Betrieb relativ hohe Temperaturen erzeugenden Schaltschrankkomponenten zu einer unterschiedlichen Wärmedehnung und damit Spannungen an den Verschraubungsstellen führen.

Der Unterflurbehälter selbst besteht vorzugsweise neben dem Hauptbehälter mit oberer Öffnung aus einem auf diese obere Öffnung dicht aufsetzbaren Behälterturm, der zur Oberfläche führt und die Tiefe bestimmt, in der der Hauptbehälter unter der Oberfläche liegt.

Während der Behälterturm gerade ausreichend groß ist, um den Einstieg eines Mitarbeiters hinab in den Hauptbehälter zu ermöglichen, ist die größte horizontale Erstreckung des Hauptbehälters wesentlich größer, also mindestens um den Faktor **1**,**5** oder **2** größer als seine vertikale Erstreckung, die mindestens Stehhöhe im Inneren bietet und die Einstiegsöffnung ist dabei vorzugsweise am einen Ende des meist länglichen Grundrisses des Hauptbehälters angeordnet.

Auf diese Art und Weise können entlang wenigstens der einen Längsseite oder entlang beider Längsseiten des Hauptbehälters Schaltschrankgestelle aufgestellt und mit den entsprechenden Komponenten bestückt werden, zwischen die ein Mitarbeiter nach Einstieg am einen Ende des Hauptbehälters problemlos und vorzugsweise aufrecht hineingehen kann.

Zwar muss hierbei eine dichte Verbindung zwischen Hauptbehälter und Behälterturm hergestellt werden, jedoch wird dieser Aufwand dadurch gerechtfertigt, dass auf diese Art und Weise zwei Einzelteile hergestellt werden müssen, die wesentlich einfacher geformt sind als ein gesamter einstückiger Unterflurbehälter und zusätzlich die entsprechenden Formen jeweils sehr viel kleiner sein können, was sich massiv auf die Formkosten auswirkt.

Der Unterflurbehälter weist vorzugsweise nach außen vorstehende Ausbuchtungen auf, deren Inneres zum Innenraum des Unterflurbehälters hin offen ist. Bei den Ausbuchtungen kann es sich um vorzugsweise horizontal oder auch vertikal ringförmig umlaufende oder nur an einzelnen Stellen des Umfanges vorhandene Ausbuchtungen handeln.

Diese Ausbuchtungen dienen auf der Außenseite des Unterflurbehälters einer guten Verhakung des Unterflurbehälters im Erdboden, wodurch insbesondere ein Herausheben des gesamten Unterflurbehälters aus dem Untergrund zum Zwecke eines Diebstahls stark erschwert bzw. ohne aufwändige Grabarbeiten unmöglich gemacht wird.

Die nach Innen hin offenen Innenräume dieser Ausbuchtungen können ferner sehr gut zum formschlüssigen Fixieren von Schaltschrankgestellen oder anderen Komponenten benutzt werden.

Vorzugsweise wird im Inneren des Hauptbehälters der Boden mit Bodenplatten ausgelegt, welche an diesen Bodenprofilen verschraubt sind, sodass eine stabile, tragende Bodenfläche erzielt wird, auf die dann die benötigten Schaltschrankgestelle aufgesetzt werden können, die dann an den Bodenplatten oder direkt den Bodenprofilen auch problemlos verschraubt werden können.

Auch im Deckenbereich des Hauptbehälters ragen in Querrichtung nach außen vorstehende Ausbuchtungen nach außen, die im mittleren Bereich als Rinnen, die zum Innenraum des Hauptbehälters hin offen sind, durchgehen können.

Obere Querträger, z.B. aus Metall, ragen mit ihren Enden formschlüssig in die nach außen vorstehenden Ausbuchtungen hinein, wobei zwischen den Enden der Querträger und den Enden der Ausbuchtungen oder auch im mittleren Bereich des Querträgers ein elastischer Puffer angeordnet ist, der einen Längenausgleich der Querträger bietet. Vorzugsweise sind die oberen Querträger zusätzlich oder stattdessen längenverstellbar.

Dadurch wird dem Umstand Sorge getragen, dass zum einen diese oberen Querträger formschlüssig möglichst genau, also kontraktierend mit ihren Enden, stirnseitig in den Ausbuchtungen anliegen und dadurch sehr gut fixiert sind. Andererseits wird dadurch die unterschiedliche Längendehnung dieser in der Regel aus Metall bestehenden Querträger ausgeglichen, die größer ist als die des vom kühlen Erdreich umgebenen, von außen im Wesentlichen immer gleich temperierten Behälters aus Kunststoff. Dieses Problem tritt im Deckenbereich des Behälters wegen der dorthin aufsteigenden Betriebswärme der Schaltschrankkomponenten stärker auf als im Bodenbereich.

Bei Bedarf kann ein solcher Längenausgleich und/oder Längenpuffer auch bei den Bodenprofilen vorgesehen werden.

An diesen Querträgern werden vorzugsweise auch die Schaltschrankgestelle in ihrem oberen Bereich verschraubt, wodurch eine in sich stabile Konstruktion aus Bodenprofilen und/oder Bodenplatte, Schaltschrankgestellen und oberen Querträgern entsteht, die formschlüssig und vorzugsweise völlig ohne Verschraubung gegenüber dem Kunststoffbehälter exakt in diesem Behälter positioniert wird.

Zusätzlich weist der Behälterturm, vor allem in seinem mittleren Bereich, über den Umfang verteilt radial nach außen vorstehende Ausbuchtungen auf, deren radiale Erstreckung mindestens **30** %, besser mindestens **50** % größer ist als der Innendurchmesser des Behälterturmes und die vorzugsweise der sicheren Verhakung im umgebenden Erdreich dienen.

Ferner weist der Hauptbehälter nach außen vorstehende, geschlossene Stutzen auf, die dem Einführen von beispielsweise Erdkabeln dienen. Die Stutzen sind durch eine von ihrem äußersten Ende nach Innen zurück versetzte Querwand dicht verschlossen, welche wie bei den Ausbuchtungen auch einstückig zusammen mit dem Unterflurbehälter hergestellt sind.

Durch diese nach innen zurückversetzte Querwand kann jedoch außerhalb der Querwand auch beim Schleuderverfahren eine definierte Innenkontur und insbesondere ein genau definierter Innendurchmesser erzielt werden, was für das spätere Abdichten von hier eingeführten z.B. Erdkabeln von sehr großem Vorteil ist.

Zum Einstieg durch den Behälterturm hinab in den Hauptbehälter muss eine Leiter vorhanden sein, die auch entsprechend an dem Behälter bzw. dem Behälterturm befestigt werden muss.

Am unteren Ende der Leiter erfolgt dies vorzugsweise durch Verschrauben der Leiter gegenüber den Bodenprofilen oder Bodenplatten.

Im oberen Bereich der Leiter ist zu diesem Zweck an der Leiter ein Ring aus Metall, häufig wie die Leiter aus Aluminium, oder auch aus Stahl, befestigt, welcher aber passgenau im Inneren des Behälterturmes angeordnet ist und dadurch die Leiter in horizontaler Querrichtung gut fixiert. Ein solcher Ring muss in einer ringförmig horizontal umlaufenden Ausbuchtung des Behälterturmes angeordnet sein.

Im oberen Bereich des Hauptbehälters kann die Leiter zusätzlich an einem der oberen Querträger verschraubt werden.

Die Leiter ist dabei zweigeteilt in einen Turmanteil und einen Hauptbehälteranteil, und diese beiden Teile sind im Übergangsbereich zwischen Behälterturm und Hauptbehälter formschlüssig aufeinander gesteckt, vorzugsweise mit Hilfe einer entsprechenden Zwischenhülse.

Das Turmteil wird dabei, wie der Behälterturm selbst, von einer maximalen Länge auf die benötigte Länge abgelängt.

Das obere Ende des Behälterturmes befindet sich im eingebauten Zustand vorzugsweise nicht auf Höhe der Erdgleiche, sondern oberhalb des oberen Endes des Behälterturmes ist zusätzlich ein Zwischenschacht, beispielsweise aus Stahl oder Beton, angeordnet, in dessen Boden das obere Ende des Behälterturmes mündet.

Dieser Zwischenschacht ist von einem massiven schweren Zwischenschachtdeckel verschlossen, der besser gesichert werden kann als der meist zusätzlich vorhandene, aber leichter ausgeführte Deckel, welcher die obere Einstiegsöffnung des Behälterturmes verschließt.

Der auf die Einstiegsöffnung des Hauptbehälters aufgesetzte Behälterturm muss gegenüber diesem dauerhaft abgedichtet werden.

Vorzugsweise erfolgt dies mittels eines außen umgebenden Spannringes, in den sowohl eine ringförmig umlaufende Aufwölbung am unteren Ende des Behälterturmes als auch eine ringförmig umlaufende Aufwölbung am oberen Ende der Einstiegsöffnung des Hauptbehälters hineinragen.

Durch eine entsprechende konische Querschnittsgestaltung dieser beiden Ausbuchtungen zusammen und einen entsprechend konisch U-förmig umgreifenden Querschnitt des Spannringes kann eine Ringdichtung zwischen Behälterturm und Hauptbehälter und/oder auch abdichtend gegenüber dem Spannring eingelegt werden und wird durch das Spannen des Spannringes zusammengepresst.

Dabei weist der Behälterturm in Abständen vertikal übereinander mehrere derartige ringförmig umlaufende Ausbuchtungen auf, die alle die gleiche Querschnittsform besitzen und zum Verspannen mittels des Spannringes gegenüber dem Hauptbehälter geeignet sind.

Auf diese Art und Weise kann der separat hergestellte Behälterturm vom unteren Ende her gekürzt werden auf die gewünschte vertikale Länge, indem er vorzugsweise lediglich unmittelbar oberhalb einer der ringförmig umlaufenden Ausbuchtungen abgelängt werden muss.

Der Behälterturm weist vorzugsweise in seinem mittleren und unteren Bereich einen runden Querschnitt auf, im oberen Bereich jedoch einen rechteckigen, insbesondere quadratischen, inneren Querschnitt, vorzugsweise angepasst an den Querschnitt des Zwischenschachtes.

Dabei ist der rechteckige Querschnitt größer als der Durchmesser des runden Querschnitts, und der runde Querschnitt mündet vorzugsweise außermittig in den rechteckigen Querschnitt.

In dem dadurch entstehenden Absatz zwischen rundem und eckigen Querschnitt ist auf der Außenseite eine vom Zwischenschacht aus erreichbare Bedieneinheit für eine Alarmanlage angeordnet, die den Zugang zum Unterflurbehälter sichert.

Ferner ist der Unterflurbehälter vorzugsweise mit einer Videoüberwachung des Innenraumes und/oder einem Rauchmelder und/oder einer automatischen Feuerlöscheinrichtung und/oder einer Beleuchtungsvorrichtung und/oder einem Belüftungssystem im Innenraum ausgestattet, und einzelne oder alle dieser Einrichtungen können ebenfalls von der angesprochenen Bedieneinheit aus bedient werden.

### c) Ausführungsbeispiele

Ausführungsformen gemäß der Erfindung sind im Folgenden beispielhaft näher beschrieben. Es zeigen:
- Fig. **1**:: eine perspektivische, teilweise aufgeschnittene Darstellung des unterirdischen Schaltschrankes,
- Fig. **2**a, b:: Vertikalschnitte durch den unterirdischen Schaltschrank in Längs- und in Querrichtung,

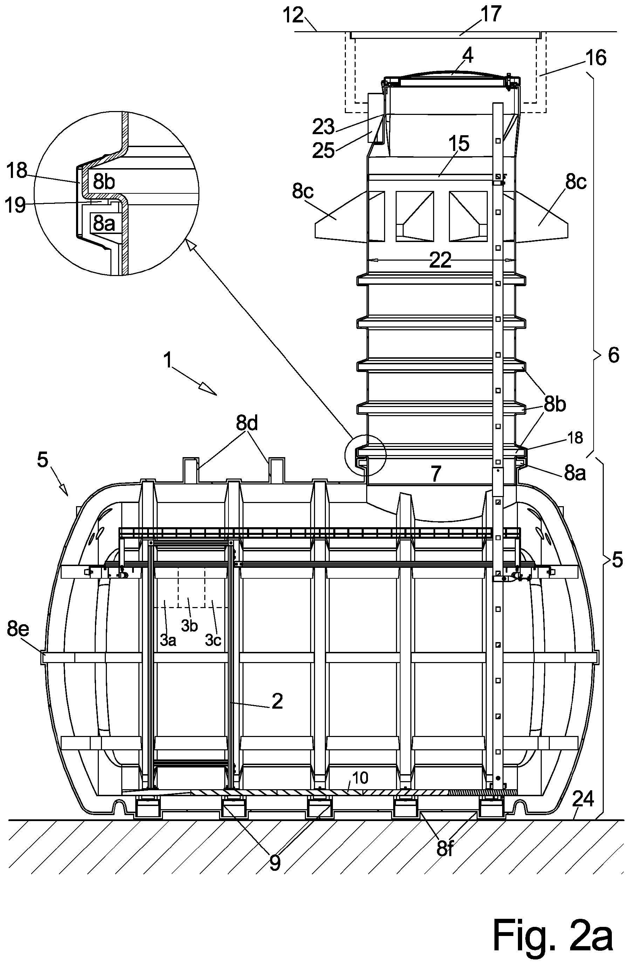

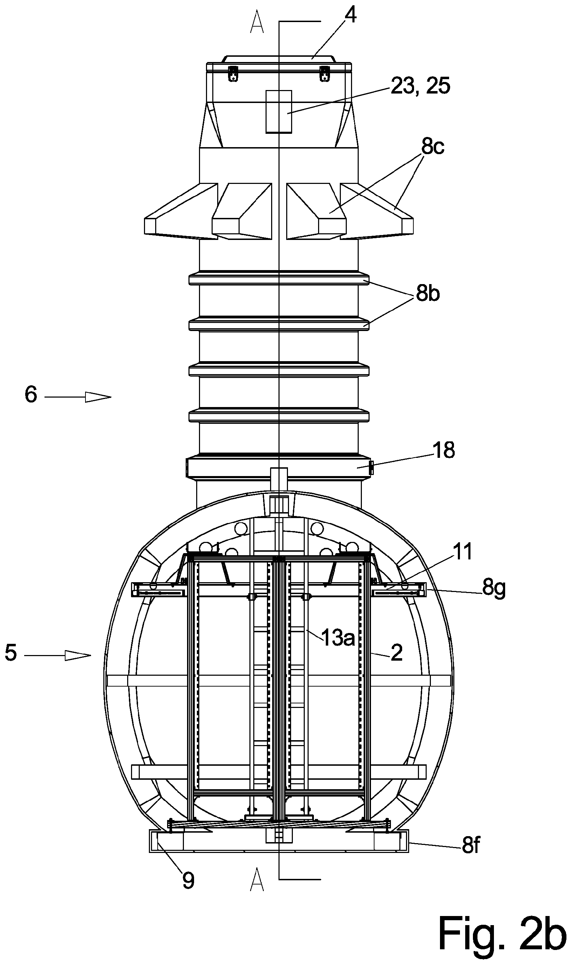

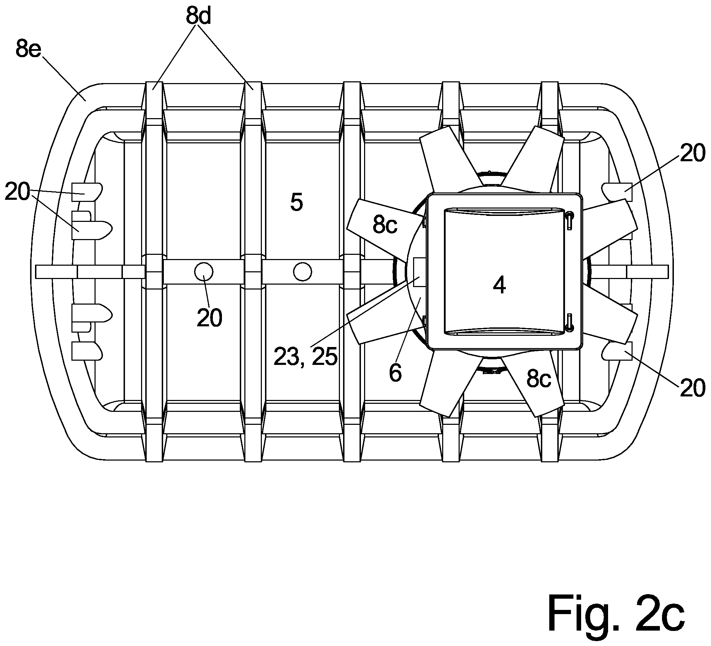

- Fig. **2**c:: eine Aussicht auf den unterirdischen Schaltschrank von oben und

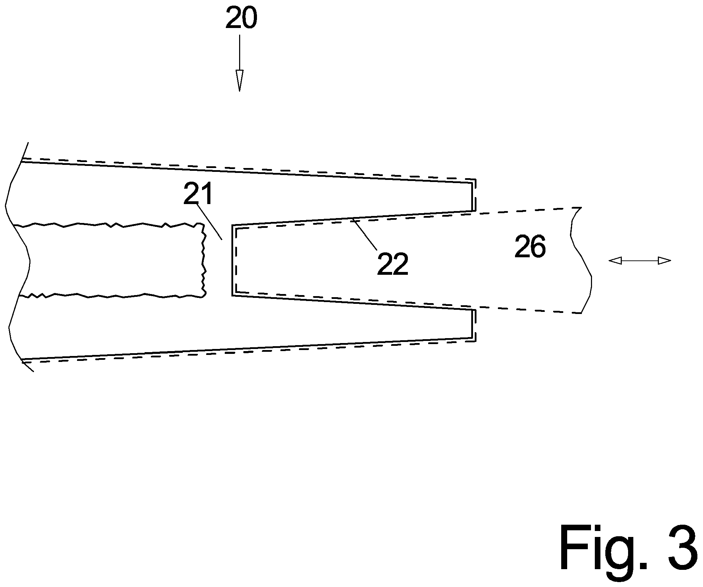

- Fig. **3**:: eine Spitze im Axial-Schnitt.

Die Figuren zeigen den Unterflurbehälter **1** im zusammengebauten Zustand und soweit komplettiert, dass bereits mindestens ein Schaltschrankgestell **2** enthalten ist, die in die Schaltschrankgestelle **2** einzubauenden Schaltschrank-Komponenten **3**a, b, c jedoch nur in Figur **2**a angedeutet sind.

Wie am besten anhand der **Figur 2a** zu erkennen ist, ist der Unterflurbehälter **1** zweiteilig ausgeführt und besteht aus einem Hauptbehälter **5** etwa in Form eines liegenden Fasses mit einer Einstiegsöffnung **7** am einen Ende seiner Oberseite und darüber hinaus aus einem etwa rohrförmigen, vertikal stehenden, Behälterturm **6**, der dicht auf diese Einstiegsöffnung **7** des Hauptbehälters **5** aufgesetzt ist. Beide Teile bestehen aus Kunststoff und sind vorzugsweise im Schleuderguss-Verfahren hergestellt. Durch die zweiteilige Ausführung sind die hierfür im einzelnen notwendigen Formen wesentlich kleiner als die Form für einen einstöckigen Unterflurbehälter **1**, was die Kosten drastisch senkt und vor allem auch den Transport des Unterflurbehälters **1** in Einzelteilen zum Einsatzort ermöglicht.

Im Benutzungszustand ist der Unterflurbehälter **1** im Erdreich eingegraben und dabei vollständig und dicht von Erdreich umgeben und muss somit dem Druck dieses Erdreiches standhalten. Zu diesem Zweck wird er nach Aushub einer entsprechenden Baugrube auf einer möglichst stabilen Auflagefläche **24** am Boden der Baugrube, beispielsweise eine Betonplatte, aufgesetzt und nach dem fertigen Zusammenbau die Baugrube verfüllt, also der Unterflurbehälter **1** mit Erdreich umgeben.

Dabei befindet sich das obere Ende des Behälterturmes **6** in aller Regel nicht auf Höhe der Erdgleiche **12**, sondern mündet im Boden eines Zwischenschachtes **16**, der in der Regel aus Beton oder Metall besteht und dessen Oberkante in etwa auf Erdgleiche **12** liegt und mit einem schweren Zwischenschacht-Deckel **17** verschlossen und gesichert ist.

Das obere Ende des Behälterturmes **6** ist zwar ebenfalls mit einem Behälterdeckel **4** verschlossen, dieser ist jedoch weit weniger stabil ausgebildet und besteht häufig aus Kunststoff und dient vor allem dem dichten Verschließen des Unterflurbehälters **1**.

Je nach Erfordernis am Einsatzort soll der Unterflurbehälter **1**, also insbesondere dessen Hauptbehälter **5**, auf einer jeweils anderen Tiefe unterhalb der Erdgleiche **12** positioniert werden.

Zu diesem Zweck wird der Behälterturm **6** von seiner ursprünglichen maximalen Länge am unteren Ende auf die gewünschte Länge gekürzt.

Die dichte Verbindung zwischen Hauptbehälter **5** und Behälterturm **6** erfolgt mittels eines Spannringes **18**, wie in **Figur 2a** vergrößert dargestellt:
Zu diesem Zweck befindet sich am oberen Ende der Einstiegsöffnung **7** des Hauptbehälters **5** an dessen Außenumfang eine nach außen vorstehende, ringförmig horizontal umlaufende Ausbuchtung **8**a, die an ihrer Unterseite eine nach außen oben ansteigende Flanke besitzt.

Der Behälterturm **6** besitzt an seinem unteren Ende analog eine nach außen vorstehende und ringförmig horizontal umlaufende Ausbuchtung **8**b, deren obere Flanke schräg nach unten außen abfällt, so dass die beiden aneinandergesetzten Ausbuchtungen **8**a,b - zwischen die vorher eine umlaufende ringförmige Dichtung **19** eingelegt wird - im Querschnitt betrachtet ein Trapez bilden, auf welches radial von außen der mit einem analog trapezförmigen inneren Freiraum ausgestattete Spannring **18** angesetzt und in Umfangsrichtung zusammengezogen wird, wodurch die beiden Ausbuchtungen **8**a, b axial gegeneinander gepresst werden.

Dabei besitzen die Abschnitte des Behälterturmes **6** zwischen den Ausbuchtungen **8**b einen Außendurchmesser, der in den Innendurchmesser des Einstieges **7** passt und als Längsführung für den aufgesetzten Behälterturm **6** dient.

Da der Behälterturm **6** diese ringförmig umlaufenden Ausbuchtungen **8**a,b vertikal beanstandet mehrfach übereinander aufweist, die jeweils die gleiche Querschnittsform besitzen, kann zum Kürzen des Behälterturmes **6** dieser jeweils unmittelbar oberhalb einer solchen Ausbuchtung **8** abgeschnitten und dadurch gekürzt werden, ohne dass sich an der Methode zum Verbinden mit dem Hauptbehälter **5** etwas ändert.

Der Behälterturm **6** weist darüber hinaus noch weitere Ausbuchtungen **8**c auf, die sich vorzugsweise oberhalb der letzten ringförmigen Ausbuchtung **8**b befinden, und einzelne, über den Umfang verteilte, radial nach außen vorstehende Ausbuchtungen bilden, die jedoch wesentlich weiter radial vorstehen als die ringförmigen Ausbuchtungen **8**b. Diese Ausbuchtungen **8**c im oberen Teil des Behälterturmes **6** dienen vornehmlich der sicheren Verankerung im Erdreich und der Verhinderung des vertikalen Herausziehens des Behälterturmes **6** aus dem Erdreich.

Auch der Hauptbehälter **5** weist weitere Ausbuchtungen auf:
Zum einen sind dies die in einer vertikalen Ebene ringförmig um den Hauptbehälter **5**, insbesondere quer zu dessen Haupterstreckungs-Richtung, umlaufenden Ausbuchtungen **8**d, sowie die ebenfalls ringförmig, jedoch in einer horizontalen Ebene umlaufenden Ausbuchtungen **8**e, die primär der Verbesserung der Stabilität des Hauptbehälters **5** in Form von Verrippungen dienen.

Des Weiteren sind dies die für die vorliegende Erfindung besonders wichtigen, im unteren Bereich des Hauptbehälters **5** angeordneten, geraden, horizontal und quer zur Haupterstreckungs-Richtung des Hauptbehälters **5** verlaufenden Ausbuchtungen **8**f:
Diese meist rinnenförmigen Ausbuchtungen sind wie alle anderen Ausbuchtungen auch zum Innenraum des Unterflurbehälters **1** hin offen. Da sie mit ihren Enden über den zum Beispiel runden oder elliptischen Querschnitt hinaus vorstehen, bilden sie in ihren Endbereichen sacklochförmige Taschen.

In diese unteren rinnenförmigen geraden Ausbuchtungen **8**f können gerade Bodenprofile **9** aus Metall eingelegt werden, beispielsweise wie in **Figur 2a** ersichtlich mit einem U-förmigen Querschnitt.

Wenn diese Bodenprofile **9** etwas höher sind als die Tiefe der rinnenförmigen Ausbuchtungen **8**f, so können anschließend auf den Bodenprofilen **9** Bodenplatten **10** verlegt und mit diesen verschraubt werden, wodurch ein durchgängiger, begehbarer und stark belastbarer Boden im Inneren des Hauptbehälters **5** erzielt wird, indem die Bodenplatten **10** nur auf den Bodenprofilen **9** und nicht direkt auf dem Boden des Hauptbehälters **5** auffliegen.

Falls die unteren rinnenförmigen Ausbuchtungen **8**f auch mit ihrer Oberseite seitlich über den Querschnitt des Hauptbehälters **5** hinaus vorstehen, müssen die darin eingelegten Bodenprofile **9**, die vom Querschnitt her möglichst genau in die rinnenförmigen Ausbuchtungen **8**f passen, in ihrer Erstreckungsrichtung umso viel kürzer ausgebildet sein, dass sie dennoch von oben eingelegt werden können, oder sie müssen teleskopierbar ausgebildet sein oder in der Erstreckungsrichtung in zwei oder drei Teile unterteilt sein, um das Vorschieben in die Sacklöcher zu ermöglichen. Die Verbindung zwischen den einzelnen Teilen kann dann über die Bodenplatten **10** erfolgen.

Auch im oberen Bereich sollen Querträger **11** aus Metall formschlüssig im Hauptbehälter **5** angeordnet werden, um daran die Schaltschrankgestelle **2** zu befestigen, die unten auf den Bodenplatten **10** aufgesetzt und verschraubt sind und aus in der Regel Metallprofilen bestehen und sich meist über die gesamte Höhe des Innenraumes des Hauptbehälters **5** erstrecken.

Zu diesem Zweck stehen im oberen Drittel des Hauptbehälters auf einander gegenüberliegenden Seiten sacklochförmige Ausbuchtungen **8**g aus der Wand des Hauptbehälters **5** nach außen vor. Die erwähnten Querträger **11** stecken dann mit ihren Enden in den einander gegenüberliegenden sackloch-förmigen Ausbuchtungen **8**g. Zu diesem Zweck sind die Querträger **11** vorzugsweise längenveränderlich, insbesondere teleskopierbar, oder mehrteilig ausgebildet.

Auf diese Art und Weise können die Schaltschrankgestelle **2**, die zum Fixieren und Verkabeln der Schaltschrank-Komponenten **3**a, b, c benötigt werden, ausschließlich durch Formschluss und ohne Verschraubung in dem aus Kunststoff bestehenden Unterflurbehälter **1** zuverlässig fixiert werden.

Die Montage dieser Schaltschrank-Komponenten erfolgt teilweise vor dem Einbringen des Unterflurbehälters **1** im Erdboden, zumindest jedoch müssen notwendige Reparaturen daran durchgeführt werden können, während der Unterflurbehälter **1** im Untergrund vergraben bleibt.

Zu diesem Zweck besitzt der Behälterturm **6** und ebenso die Einstiegsöffnung **7** einen Innenquerschnitt, der groß genug ist, um einen Bediener durch den Behälterturm **6** in den Hauptbehälter **5** hinabsteigen zu lassen und dort notwendige Umbaumaßnahmen oder Reparaturen durchzuführen.

Zu diesem Zweck erstreckt sich im Inneren des Behälterturmes **6** auf einer seiner Seiten eine Leiter **13** vom Behälterdeckel **4** bis hinab auf die Bodenplatten **10** des Hauptbehälters **5**. Diese Leiter **13** ist wie der Unterflurbehälter **1** auch zweigeteilt mit einer Verbindungsstelle auf Höhe des Spannringes **18**, also der Trennebene zwischen Hauptbehälter **5** und Behälterturm **6**.

Der untere Teil der Leiter **13**, der Hauptbehälter-Teil **13**a, ist mit seinem unteren Ende auf den Bodenplatten **10** oder direkt auf einem der Bodenprofile **9** verschraubt und im oberen Bereich z. B. an einem der Querträger **11**.

Der obere Teil der Leiter **13**, das Behälterturm-Teil **13**b, steckt mit seinem unteren Ende mit seinen Leiter-Holm formschlüssig in einer Führungshülse **14**, die auf den oberen Enden der Räume des Holme-Teiles **13**a aufgesteckt oder fest mit diesem verbunden ist.

Im oberen Bereich ist das Behälterturm-Teil **13**b der Leiter **13** mit einem Ring **15** fest verbunden, der sich passgenau an den Innenumfang des Behälterturms **6** anpasst, aber mit diesem nicht verschraubt ist, und lediglich durch seine Passgenauigkeit diesen oberen Teil der Leiter **13** in radialer Richtung in Position hält.

Der Hauptbehälter **5** besitzt weiterhin meist horizontal nach außen vorstehende und wiederum zum Innenraum hin offene Stutzen **20**, die dem Hereinführen von im Erdboden verlegten Kabeln in den Unterflurbehälter **1** dienen.

Dazu müssen die entsprechenden Stutzen **20** natürlich zuvor geöffnet werden, indem die die Stutzen verschließende Querwand **21** entfernt wird.

Das durch den geöffneten Stutzen **20** eingeführte Kabel muss gegenüber dem Stutzen **20** anschließend abgedichtet werden, um Eindringen von Wasser aus der Umgebung in den Unterflurbehälter **1** zu vermeiden.

Wie in Figur **3** dargestellt, ist hierfür ein definierter Innendurchmesser **22** des Stutzens **20** äußerst hilfreich.

Bei einem Stutzen **20**, der zusammen mit dem gesamten zum Beispiel Hauptbehälter **5** im Schleuderguss-Verfahren hergestellt wird, befindet sich normalerweise diese Querwand am äußersten Ende des Stutzens **20**, und in den weiter innen liegenden Bereichen des Stutzens **20** kann die Größe des Innendurchmessers nicht exakt vorhergesagt werden, da beim Schleuderguss-Verfahren sich die Wandstärken je nach Position, Fliehkraft etc. beim Herstellen des Hauptbehälters **5** ändern können.

Aus diesem Grund ist die Querwand **21** vom äußeren Ende des Stutzens **20** nach innen zurückversetzt und der außerhalb der Querwand liegende Innendurchmesser **22** wird mit definierten Abmessungen hergestellt, indem beim Herstellen des Hauptbehälters **5** hier ein von außen aus der Form vorstehender, beweglicher, Formschieber **26** benutzt wird.

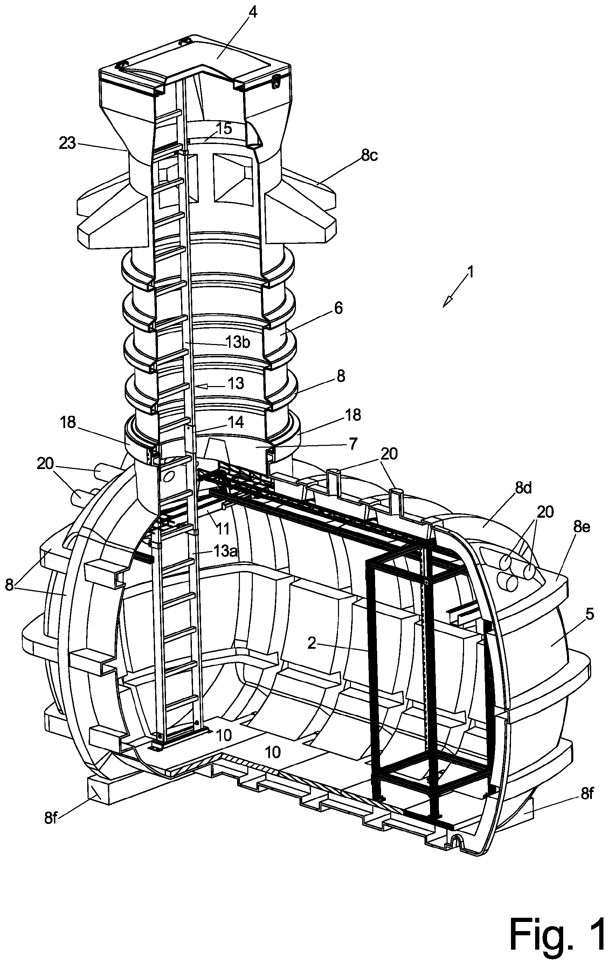

Wie am besten die Figuren **1** und **2**a zeigen, besitzt der Behälterturm **6** über den größten Teil seiner Höhe im Inneren einen gleichbleibenden, runden Querschnitt, jedoch lediglich im oberen Bereich einen viereckigen Querschnitt, vorzugsweise einen quadratischen Querschnitt, der jedoch nicht symmetrisch zu dem runden Querschnitt sitzt, sondern mit diesem im Wesentlichen nur an einer Seite fluchtet.

Da die Kantenlänge des quadratischen Querschnittes im oberen Teil etwas geringer ist als der Durchmesser des runden Querschnitts im unteren Teil, ergibt sich am Übergang auf einer Seite ein Absatz **23**, in dem eine Bedieneinheit **25** für all diejenigen Funktionen und Ausstattungen im Inneren des Unterflurbehälters angeordnet sein kann, die auch ohne Öffnen des Behälterdeckels **4** zugänglich sein soll und zu diesem Zweck bei Vorhandensein eines Zwischenschachtes **16** auch aus dem Boden des Zwischenschachtes **16** nach oben vorsteht und zugänglich ist.

Denn im Inneren des Unterflurbehälters **1** kann beispielsweise eine Videoüberwachung des Innenraums und/oder ein Rauchmelder und/oder eine automatische Feuerlöscheinrichtung und/oder eine Beleuchtungsvorrichtung und/oder ein Lüftungssystem vorhanden sein, deren Funktion von dieser Bedieneinheit **25** aus entweder überwacht werden soll durch dort vorhandene Funktionsanzeigen als auch an- und ausgeschaltet werden soll.

Insbesondere für eine Alarmanlage gegen unbefugtes Öffnen des Behälterdeckels **4** ist dies erforderlich, um diese Alarmanlage zu deaktivieren, bevor von einer berechtigten Person der Behälterdeckel **4** geöffnet wird.

### BEZUGSZEICHENLISTE

- **1**: Unterflurbehälter
- **2**: Schaltschrankgestell
- **3**a,b,c: Schaltschrankkomponenten
- **4**: Behälterdeckel
- **5**: Hauptbehälter
- **6**: Behälterturm
- **7**: Einstiegsöffnung
- **8**: Ausbuchtung
- **9**: Bodenprofil
- **10**: Bodenplatte
- **11**: Querträger
- **12**: Erdgleiche
- **13**: Leiter
- **13**a: Hauptbehälter-Teil
- **13**b: Behälterturm-Teil
- **14**: Führungshülse
- **15**: Führungsring
- **16**: Zwischenschacht
- **17**: Zwischenschacht-Deckel
- **18**: Spannring
- **19**: Dichtung
- **20**: Stutzen
- **21**: Querwand
- **22**: Innendurchmesser
- **23**: Absatz
- **24**: Auflagefläche
- **25**: Bedieneinheit
- **26**: Formschiebe

## Patentansprüche

1. Unterirdischer Schaltschrank, mit
- einem im Untergrund fixierten Unterflurbehälter (**1**) mit einer oberen Einstiegsöffnung (**7**), wobei der Unterflurbehälter (**1**) aus Kunststoff besteht, wobei der Unterflurbehälter (**1**) einen Hauptbehälter (**5**) mit einem Boden umfasst,
- wenigstens einem Schaltschrankgestell (**2**) zum Befestigen der Schaltschrankkomponenten (**3**a,b,c),
- einem oberen Behälter-Deckel (**4**),
**dadurch gekennzeichnet, dass**
wenigstens das Schaltschrankgestell (**2**) formschlüssig, insbesondere ausschließlich formschlüssig, im Inneren des Unterflurbehälters (**1**) befestigt ist, indem entlang des Bodens des Hauptbehälters (**5**) horizontal verlaufende Ausbuchtungen (**8**) vorhanden sind, die auf ihrer ganzen Länge nach oben, zum Innenraum hin offen sind und in welche Bodenprofile (**9**) eingelegt sind, wobei das Schaltschrankgestell (**2**) mit den Bodenprofilen (**9**) verbunden ist.

2. Unterirdischer Schaltschrank nach Anspruch 1,
**dadurch gekennzeichnet, dass**
der Unterflurbehälter (**1**) aus dem Hauptbehälter (**5**) mit einer oberer Einstiegsöffnung (**7**) sowie einem auf die Einstiegsöffnung (**7**) dicht aufsetzbaren Behälterturm (**6**) besteht und insbesondere der Hauptbehälter (**5**) eine horizontale Erstreckung aufweist, die größer ist, insbesondere mindestens um den Faktor **1**,**5**, besser mindestens um den Faktor **2**, größer ist als seine vertikale Erstreckung und die Einstiegsöffnung (**7**) an einem Ende des Grundrisses des Hauptbehälters (**5**) angeordnet ist.

3. Unterirdischer Schaltschrank nach einem der vorhergehenden Ansprüche,
**dadurch gekennzeichnet, dass**
der Unterflurbehälter (**1**) nach außen vorstehende Ausbuchtungen (**8**) aufweist, deren Inneres zum Innenraum des Unterflurbehälters (**1**) hin offen sind.

4. Unterirdischer Schaltschrank nach einem der vorhergehenden Ansprüche,
**dadurch gekennzeichnet, dass** im Inneren des Hauptbehälters (**5**) der Boden mit Bodenplatten (**10**) ausgelegt ist, welche an den Bodenprofilen (**9**) verschraubt sind.

5. Unterirdischer Schaltschrank nach einem der vorhergehenden Ansprüche,
**dadurch gekennzeichnet, dass** im Deckenbereich des Hauptbehälters (**5**) quer verlaufende, über den vertikal geschnittenen Querschnitt des Hauptbehälters (**5**) auch nach außen vorstehende, Ausbuchtungen (**8**) vorhanden sind, in welche obere Querträger (**11**) mit ihren Enden formschlüssig eintauchen und zwischen den Enden der Querträger (**11**) und den Enden der Ausbuchtungen (**8**) ein elastischer Puffer angeordnet ist.

6. Unterirdischer Schaltschrank nach einem der vorhergehenden Ansprüche,
**dadurch gekennzeichnet, dass** die Leiter (**13**) zum Einstieg in den Unterflurbehälter (**1**) in der Länge zweigeteilt ist in einen Hauptbehälter-Teil (**13**a) und einen Behälterturm-Teil (**13**b), und die beiden Teile an der Fuge zwischen Hauptbehälter (**5**) und Behälterturm (**6**) formschlüssig über eine Führungshülse (**14**) ineinander gesteckt sind.

7. Unterirdischer Schaltschrank nach einem der vorhergehenden Ansprüche,
**dadurch gekennzeichnet, dass** der Behälterturm-Teil (**13**b) der Leiter (**13**) an einem Führungsring (**15**) verschraubt ist, der lose im Inneren des Behälterturmes (**6**) angeordnet ist und nur geringfügig kleiner ist als der Innendurchmesser (**22**) des Behälterturmes (**6**).

8. Unterirdischer Schaltschrank nach einem der vorhergehenden Ansprüche,
**dadurch gekennzeichnet, dass die Hauptbehälter-Leiter** (**13**) mit dem unteren Ende an den Bodenplatten (**10**) verschraubt ist und im oberen Bereich an einem der oberen Querträger (**11**).

9. Unterirdischer Schaltschrank nach einem der vorhergehenden Ansprüche,
**dadurch gekennzeichnet, dass** der Unterflurbehälter (**1**) unterhalb der Erdgleiche angeordnet ist und oberhalb dem Behälter ein Zwischenschacht (**16**) angeordnet ist, der von einem massiven, schweren Zwischenschacht-Deckel (**17**) verschlossen ist.

10. Unterirdischer Schaltschrank nach einem der vorhergehenden Ansprüche,
**dadurch gekennzeichnet, dass** der Behälterturm (**6**) aufder Einstiegsöffnung (**7**) des Hauptbehälters (**5**) aufgesetzt ist und beide mittels eines außen umgebenden Spannringes (**18**) mittels zwischengelegter Dichtung (**19**) axial gegeneinander verpresst sind.

11. Unterirdischer Schaltschrank nach einem der vorhergehenden Ansprüche,
**dadurch gekennzeichnet, dass** zumindest der Behälterturm (**6**) in Abständen ringförmig umlaufende Ausbuchtungen (**8**) aufweist, die alle die gleiche Querschnittsform besitzen und geeignet sind zum Verspannen gegenüber dem verdickten oberen Rand der Einstiegsöffnung (**7**) des Hauptbehälters (**5**).

12. Unterirdischer Schaltschrank nach einem der vorhergehenden Ansprüche,
**dadurch gekennzeichnet, dass** insbesondere der Hauptbehälter (**5**) nach außen vorstehende, geschlossene Stutzen (**20**) zum Einbringen von zum Beispiel Erdkabeln aufweist, und die Stutzen (**20**) durch eine von ihrem äußersten Ende nach innen zurück versetzte Querwand (**21**) dicht verschlossen sind, die einstückig zusammen mit dem Unterflurbehälter (**1**) hergestellt sind.

13. Unterirdischer Schaltschrank nach einem der vorhergehenden Ansprüche,
**dadurch gekennzeichnet, dass**
der Behälterturm (**6**) über seinen gesamten mittleren und unteren Bereich einen runden Innenquerschnitt besitzt, im oberen Bereich jedoch einen rechteckigen inneren Querschnitt besitzt, dessen Kantenlänge größer ist als der Durchmesser des runden Querschnitts.

14. Unterirdischer Schaltschrank nach einem der vorhergehenden Ansprüche,
**dadurch gekennzeichnet, dass**
der Unterflurbehälter (**1**) eine Videoüberwachung des Innenraums und/oder einen Rauchmelder und/oder eine automatische Feuerlöscheinrichtung im Innenraum und/oder eine Beleuchtungsvorrichtung im Innenraum und/oder ein Belüftungssystem im Innenraum aufweist.

15. Unterirdischer Schaltschrank nach einem der vorhergehenden Ansprüche,
**dadurch gekennzeichnet, dass**
der Behälterturm (**1**) über den Umfang verteilt nach Außen vorstehende Ausbuchtungen (**8**) aufweist, deren radiale Erstreckung mindestens **30** % des Innendurchmessers (**22**) des Behälterturmes (**6**) beträgt.

## Claims

1. An underground electrical cabinet, comprising:
- an underground container (1) fixed in the underground and including an upper entry opening (7), wherein the underground container (1) is made from a synthetic material, wherein the underground container (1) includes a main container (5) including a base,
- at least one electrical cabinet frame (2) for attaching electrical cabinet components (3a, b, c),
- an upper container cover (4),
**characterized in that** the
at least the electrical cabinet frame (2) is attached form locking, in particular exclusively form locking in an interior of the underground container (1), wherein horizontally extending bulges (8) are provided along the base of the main container (5) wherein the bulges are open in an upward direction towards an interior over an entire length of the bulges and wherein base profiles (9) are inserted into the bulges, wherein the electrical cabinet frame (2) is connected with the base profiles (9).

2. The underground electrical cabinet according to claim 1,
**characterized in that**
the underground container (1) includes the main container (5) with the upper entry opening (7) and a container tower (6) that is applicable to the entry opening (7) with a tight seal and in particular the main container (5) has a horizontal extension that is greater in particular at least by a factor of 1.5, better at least by a factor of 2 than a vertical extension and the entry opening (7) is arranged at an end of a plan view of the main container (5).

3. The underground electrical cabinet according to one of the preceding claims,
**characterized in that**
the underground container (1) includes outward protruding bulges (8), wherein an interior of the outward protruding bulges is open towards the interior of the underground container (1).

4. The underground electrical cabinet according to one of the preceding claims,
**characterized in that**
a base in the interior of the main container (5) is covered with the base plates (10) which are bolted to the base profiles (9).

5. The underground electrical cabinet according to one of the preceding claims,
**characterized in that**
transversally extending bulges (8) are provided in a ceiling portion of the main container (5) wherein the bulges protrude outward beyond a vertical cross section of the main container (5), wherein upper transversal beams 11 protrude with ends into the bulges (8) in a form locking manner and wherein an elastic buffer is arranged between the ends of the transversal beams (11) and the ends of the bulges (8).

6. The underground electrical cabinet according to one of the preceding claims,
**characterized in that**
a ladder (13) for entering the underground container (1) is divided in two components length wise, into a main container component (13a) and a container tower component (13b) and both components are inserted into each other at a gap between the main container (5) and the container tower (6) in a form locking manner through a support sleeve (14).

7. The underground electrical cabinet according to one of the preceding claims,
**characterized in that**
the container tower element (13b) of the ladder (13) is bolted to a support ring (15) which is loosely arranged in an interior of the container tower (6) and which is only slightly smaller than an inner diameter (22) of the container tower (6).

8. The underground electrical cabinet according to one of the preceding claims,
**characterized in that**
the main container ladder (13) is bolted with a lower end to the base plates (10) and bolted in an upper portion to one of the upper transversal beams (11).

9. The underground electrical cabinet according to one of the preceding claims,
**characterized in that**
the underground container (1) is arranged below ground level and an intermediary shaft (16) is arranged above the underground container wherein the intermediary shaft is closed by a massive heavy intermediary shaft cover (17).

10. The underground electrical cabinet according to one of the preceding claims,
**characterized in that**
the container tower (6) is applied to an entry opening (7) of the main container (5) and both elements are axially pressed against each other by an externally enveloping clamping ring with a gasket (19) arranged between both elements.

11. The underground electrical cabinet according to one of the preceding claims,
**characterized in that**
at least the container tower (6) includes annular circumferential bulges (8) that are spaced apart from each other and which have identical cross sectional shapes and which are configured to clamp against a thickened upper rim of the entry opening (7) of the main container (5).

12. The underground electrical cabinet according to one of the preceding claims,
**characterized in that**
in particular the main container (5) includes outward protruding closed spouts (20) for introducing for example ground cables wherein the spouts (20) are closed tight by a transversal wall (21) that is offset inward from an outer end of the closed spouts, wherein the spouts are integrally made in one piece together with the underground container (1).

13. The underground electrical cabinet according to one of the preceding claims,
**characterized in that**
the container tower (6) has a circular inner cross section over an entire medium and lower portion, but has a rectangular inner cross section in an upper portion wherein an edge length of the rectangular inner cross section is greater than a diameter of the circular cross section.

14. The underground electrical cabinet according to one of the preceding claims,
**characterized in that**
the underground container (1) includes video monitoring of an interior and/or a smoke detector and/or an automatic fire extinguisher in the interior and/or an illumination device in the interior and/or a ventilation device in the interior.

15. The underground electrical cabinet according to one of the preceding claims,
**characterized in that**
the container tower (6) includes bulges (8) that protrude in a radially outward direction along a circumference of the container tower and which have a radial extension of at least 30% of an inner diameter (22) of the container tower (6).

## Revendications

1. Armoire de commande souterraine, comprenant
- un réservoir souterrain fixé (1) dans le sous-sol avec une ouverture d'entrée supérieure (7), le conteneur souterrain (1) se composant de matière plastique, le conteneur souterrain (1) comprenant un conteneur principal (5) avec un fond,
- au moins un cadre d'armoire (2) pour fixer les composants (3a, b, c) de l'armoire de commande,
- un couvercle de conteneur supérieur (4),
**caractérisée en ce qu'**
au moins le cadre d'armoire (2) est fixé par adhérence des formes, notamment exclusivement par adhérence des formes, à l'intérieur du conteneur souterrain (1), dans le fait que le fond du conteneur principal (5) présente sur sa longueur des évidements (8) s'étendant horizontalement lesquels sont ouverts sur toute leur longueur vers le haut en direction de l'intérieur et dans lesquels sont placés des profilés de sol (9), le cadre d'armoire (2) étant relié aux profilés de sol (9).

2. Armoire de commande souterraine selon la revendication 1,
**caractérisée en ce que**
le conteneur souterrain (1) se compose d'un conteneur principal (5) avec une ouverture d'entrée supérieure (7) ainsi qu'une tour de conteneurs (6) pouvant être placée de manière étanche sur l'ouverture d'entrée (7), et notamment le conteneur principal (5) présente une extension horizontale qui est plus grande, en particulier au moins d'un facteur 1,5, de préférence au moins d'un facteur 2, plus grande que son étendue verticale, et l'ouverture d'entrée (7) est disposée à une extrémité de la structure de base du conteneur principal (5).

3. Armoire de commande souterraine selon l'une des revendications précédentes,
**caractérisée en ce que**
le conteneur souterrain (1) présente des évidements (8) en saillie vers l'extérieur dont l'intérieur est ouvert en direction de l'espace interne du conteneur souterrain (1).

4. Armoire de commande souterraine selon l'une des revendications précédentes,
**caractérisée en ce que**
le fond est recouvert de plaques de fond (10) à l'intérieur du conteneur principal (5) qui sont vissés aux profils de sol (9).

5. Armoire de commande souterraine selon l'une des revendications précédentes,
**caractérisée en ce que**
la zone du plafond du conteneur principal (5) présente des évidements (8) se prolongeant transversalement au-dessus de la section verticale du conteneur principal (5) qui font également saillie vers l'extérieur, dans lesquels les extrémités de traverses supérieures (11) s'engagent par adhérence de forme et un tampon élastique est disposé entre les extrémités des traverses (11) et les extrémités des évidements (8).

6. Armoire de commande souterraine selon l'une des revendications précédentes,
**caractérisée en ce que**
l'échelle (13) pour entrer dans le conteneur souterrain (1) est divisée en deux dans la longueur en une partie de conteneur principal (13a) et une partie de tour de conteneurs (13b), et les deux parties sont enclenchées et bloquées entre elles au niveau du joint entre le conteneur principal (5) et la tour de conteneurs (6) par l'intermédiaire d'un manchon de guidage (14).

7. Armoire de commande souterraine selon l'une des revendications précédentes,
**caractérisée en ce que**
la partie de tour de récipient (13b) de l'échelle (13) est vissée sur une bague de guidage (15), qui est disposée amovible à l'intérieur de la tour de conteneurs (6) et qui est légèrement inférieure au diamètre interne (22) de la tour de conteneurs (6).

8. Armoire de commande souterraine selon l'une des revendications précédentes,
**caractérisée en ce que**
l'échelle (13) du conteneur principal est vissée par l'extrémité inférieure aux plaques de fond (10) et dans la zone supérieure à l'une des traverses supérieures (11).

9. Armoire de commande souterraine selon l'une des revendications précédentes,
**caractérisée en ce que**
le conteneur souterrain (1) est disposé en dessous de la surface du sol et, au-dessus du conteneur, un puit intermédiaire (16) qui est fermé par un couvercle intermédiaire lourd et massif (17).

10. Armoire de commande souterraine selon l'une des revendications précédentes,
**caractérisée en ce que**
la tour de conteneurs (6) est placée sur l'ouverture d'entrée (7) du conteneur principal (5) et les deux sont pressées axialement l'une contre l'autre au moyen d'une bague de serrage (18) externe faisant pression au moyen garniture d'étanchéité intermédiaire (19).

11. Armoire de commande souterraine selon l'une des revendications précédentes,
**caractérisée en ce**
**qu'**au moins la tour de conteneurs (6) présente des évidements circulaires (8) espacés qui présentent tous la même forme de section transversale et sont appropriés pour se tendre par rapport au bord supérieur plus épais de l'ouverture d'entrée (7) du conteneur principal (5).

12. Armoire de commande souterraine selon l'une des revendications précédentes,
**caractérisée en ce**
**qu'**en particulier le conteneur principal (5) présente des tubulures fermées (20) saillantes vers l'extérieur par exemple pour l'insertion de câbles de terre et les tubulures (20) sont fermées et étanches par une paroi transversale (21) légèrement décalée vers l'intérieur qui est fabriquée d'un seul tenant avec le conteneur souterrain (1).

13. Armoire de commande souterraine selon l'une des revendications précédentes,
**caractérisée en ce**
**que** la tour de conteneurs (6) possède sur l'ensemble de sa zone moyenne et inférieure une section transversale interne ronde, mais dans la zone supérieure une section transversale interne rectangulaire, dont la longueur de bord est supérieure au diamètre de la section transversale ronde.

14. Armoire de commande souterraine selon l'une des revendications précédentes,
**caractérisée en ce**
**que** le conteneur souterrain (1) présente une vidéo-surveillance de l'espace intérieur et/ou un détecteur de fumée et/ou un dispositif automatique d'extinction et/ou un dispositif d'éclairage à l'intérieur et/ou un système d'aération.

15. Armoire de commande souterraine selon l'une des revendications précédentes,
**caractérisée en ce**
**que** la tour de conteneurs (1) présente des évidements (8) faisant saillie vers l'extérieur répartis sur la périphérie, dont l'extension radiale est d'au moins 30 % du diamètre intérieur (22) de la tour de conteneurs (6).
